# EUROPEAN PATENT SPECIFICATION

(11) **EP 3 060 411 B1**
(45) Date of publication and mention of the grant of the patent: **23.06.2021**
(21) Application number: 14799840.5
(22) Date of filing: 17.10.2014
(51) Int. Cl.: B60B 15/02, B60B 15/26, B60B 39/00, B60B 9/02, B60C 7/14, B60B 15/04

(54) **VEHICLE TRACTION ELEMENT**
FAHRZEUGANTRIEBSELEMENT
ÉLÉMENT DE TRACTION DE VÉHICULE

(30) Priority: 21.10.2013 GB 201318620
(43) Date of publication of application: 31.08.2016
(73) Proprietor: Ross Robotics Limited, Henley Road Marlow Buckinghamshire SL7 2DU (GB)
(72) Inventor: NORMAN, Philip Ross, Maidenhead, Berkshire SL6 6AE (GB)
(74) Representative: Murgitroyd & Company
(86) International application number: PCT/GB2014/000425
(87) International publication number: WO 2015/059438

(56) References cited:
- WO-A1-2008/071873
- WO-A1-2012/143715
- FR-A1- 2 314 394
- FR-A1- 2 567 078
- GB-A- 190 922 366
- None

## Description

The present invention relates to a vehicle traction element, especially an element directed to offering enhanced grip in relation to challenging terrain, as disclosed in the preamble of independent claim 1 and as it is known from document WO 2008/071873 A1.

Vehicle wheels and, in the case of track-laying vehicles, vehicle tracks are normally provided with traction-enhancing peripheral protrusions in the form of tread blocks, ribs, studs and the like in a wide variety of shapes and patterns. Vehicles specifically designed to have the capability of negotiating difficult surfaces, such as those covered with snow, ice, mud or sand or strewn with obstacles, or inclined - even vertical - surfaces usually have wheels or tracks with peripheral protrusions of dedicated design with respect to the character of the surface or surfaces over which travel of the vehicle is intended or envisaged. Such dedicated designs, for example spikes for ice, chevron ribs for mud and other such forms, are inevitably compromised in relation to other surfaces for which the respective design is not optimised.

It is therefore the principal object of the present invention to provide a vehicle traction element with a capability of achieving traction on a wide range of surface textures, consistencies and gradients.

A subsidiary object of the invention is to provide a vehicle traction element able to surmount obstacles including low-height vertical surfaces, such as step and stair risers, gutters, etc.

Yet another subsidiary object of the invention is to provide a vehicle traction element with inherent springing to provide a measure of thrust and shock absorption in relation to a supported vehicle.

A further object, in the case of a developed element, is to achieve comparable levels of enhanced grip in two mutually opposite directions of rotation or circulation of the element.

Other objects and advantages of the invention will be apparent from the following description.

According to the present invention there is provided a vehicle traction element for providing traction relative to a surface over which a vehicle equipped with the element is to travel, comprising a rotary or circulatory member defining a periphery and provided thereat with a series of resiliently deflectable surface-engaging arms substantially equidistantly spaced around the periphery and of substantially the same shape and orientation, each arm having a root at the periphery and a tip remote from the periphery and each arm comprising an inner curved portion starting at the root and departing from the periphery at an acute angle on a concave side of the inner curved portion and an outer curved portion ending at the tip and curved in opposite sense to the inner curved portion.

Such an element is characterised by peripheral arms which function as claw-like grippers to engage surface irregularities and effectively lever the element over the irregularities while resiliently flexing to assist acquisition and maintenance of purchase. The deflectable arms similarly provide purchase in relation to soft, slippery and other low-friction surfaces. The arm tips, particularly when several simultaneously engage a surface, can provide an overall footprint of increased area and this footprint is further increased if faces of the arms also come into contact with surfaces, for example under arm deflection or during levering over obstacles. The traction capability of the element is significantly enhanced by the ability of the arms to yield, rather than slip, under load and the resilient deflection imparts impulsion as continuing rotation or circulation of the elements relieves a deflected arm of load and allows return to its undeflected shape, in effect applying thrust between the element and the surface over which it is travelling. The element thus has a highly dynamic character, unlike conventional low-dynamic elements employing, for example, rubber blocks or ribs with limited capability of compression and relaxation. Similar limitations apply to semi-rigid star wheels, the star arms of which exhibit minimal compliance and, unlike the traction element of the present invention, provide no useful shock absorption.

The traction element in the case of a rotary member can be a wheel or a wheel rim, thus a member rotatable about an axis of rotation, or in the case of a circulatory member an endless track, thus a member such as a belt circulating on a path defined by at least two spaced-apart wheels or other circular or part-circular guide bodies. The concept of the present invention, that is to say a series of resiliently deflectable surface-engaging arms of specific shape and orientation, is equally applicable to provision of traction for a wheeled vehicle and provision of traction for a track-laying vehicle. The arms function analogously in both traction element configurations, although in general tracks inherently provide greater traction than wheels and the benefits of the present invention are accordingly more readily evident in the case of rotary members such as wheels.

For preference, each arm has a greater degree of resilience in the vicinity of its tip than in the vicinity of its root. Consequently, flexure of each arm under load is concentrated in its outer region, particularly the inner curved portion, so that the integrity of the attachment of the root to the periphery of the rotary or circulatory member is not compromised by stress generated by bending at or in the region of the point of attachment. In addition, the bending or deflection of the arm can be influenced, especially by selection of the degree of deflection over a given length of the arm, to optimise the leverage and impulsion characteristics of the arm for given surface textures and consistencies. Whilst the degree of resilience can be varied by difference in constituent material, for example differing material densities, variation in resilience can be realised in a particularly simple manner if each arm is thinner in the vicinity of its tip than in the vicinity of its root. Merely the arm cross-sectional area is then varied, such as by way of substantially constant reduction in the cross-sectional area of at least the inner curved portion of the arm in direction towards the tip so as to provide its greater degree of resilience in the vicinity of the tip.

The radius of curvature of the inner curved portion of each arm is preferably greater than that of the outer curved portion of the respective arm. This measure results in an arm which can be structured to extend gradually or progressively away from the periphery of the rotary or circulatory member before transition to a more strongly curved portion - the outer curved portion - terminating in the tip. This then provides, at a radially outwardly facing surface of the inner curved portion, a relatively large contact area for frictional engagement with the ground under deflection of the arm, particularly under deflection of the outer curved portion when the tip is pressed against the surface of the ground or other supporting surface. The footprint area of the traction element can thus be much greater than merely that represented by the area of the tip or areas of several tips if two or more tips are able to simultaneously engage the surface.

For preference, the arms are of such a length and spaced apart by such an amount that under maximum deflection towards the periphery of the member each arm bears at a tip portion thereof against a root portion of a respective adjacent arm of the series. Such a root portion effectively functions as a stop to restrict arm deflection, which can be of advantage in cases of heavy loading of the arm to such an extent as to potentially exceed the elastic limit of the arm material or deprive the arm tip of its effective gripping capability.

Constructional simplicity can be enhanced if the arms are formed integrally with the rotary or circulatory member, for example by injection moulding from resilient material, particularly highly-stiff resilient material. The shape of the member and the arms can in general be such that demoulding can be easily achieved without any need to take account of undercuts, recesses or complicated shapes. Such a construction is particularly suitable for a rotary member in the form of wheel rims intended to be carried on a wheel or hub, which can then be of a different, rigid material.

Traction capability can be significantly increased if the traction element comprises at least one further series of such arms alongside the first-mentioned series, which then opens up the possibility of creating different traction characteristics within the traction element if, for example, the shape, number and/or constituent material of the arms of the at least one series differs or differ from that or those of the arms of the first mentioned series.

Apart from that possibility, it can be particularly advantageous if the arms of the at least one further series are oriented oppositely to the arms of the first-mentioned series, which then imparts to the traction element a fully-bi-directional traction capability, i.e. the traction characteristics can be the same for either direction of rotation or circulation of the rotary or circulatory member. In that case, constructional simplicity is achieved if the shape of each arm of the at least one further series is substantially the same as that of each arm of the first-mentioned series and/or the number of arms of the at least one further series is the same as the number of arms of the first-mentioned series. Two or more substantially identical series of interlinked arms can then be produced and assembled in, in effect, a volte-face relationship.

For preference, the root of each arm of the at least one further series lies alongside the root of a respective arm of the first-mentioned series, which may considerably facilitate achieving a symmetrical disposition of arms and even distribution of gripping forces exerted by the arms, in particular by optimising the cadence of the arm tips to produce the closest approximation to a continuous circumference. Advantageously, the tips of the arms of the at least one further series are offset from the tips of the arms of the first-mentioned series in the circumferential direction of the member, which, depending on arm number and positioning, is achievable regardless of whether the arms of the at least one further series are oriented in the same sense as or opposite sense to the arms of the first-mentioned series. Offset of the arm tips multiplies the number of tips potentially able to engage the ground or other supporting surface at any one point in time.

Construction of the traction element with multiple series of arms may be facilitated if the rotary or circulatory member is of divided construction, comprising a first part provided with the arms of the first-mentioned series and a second part provided with the arms of the at least one further series, the parts being secured against relative movement. In that case it is possible to produce, for example, two identical parts which can be assembled together in such a way that the arms of the at least one further series selectably have the same orientation as or opposite orientation to the arms of the first-mentioned series.

The traction element can, if desired, comprise a plurality of further series of such arms, in which case it can be advantageous if the arms of each series in the totality of series is oriented in opposite sense to the arms of the or each series directly alongside. Thus, as viewed transversely to the direction of rotation or circulation of the rotary or circulatory member the arms of the different series have opposite directions of orientation in alternation. The bi-directionality of the traction capabilities of the totality of arms of the traction element can thus be optimised or varied depending on the number of series of arms.

Preferred embodiments of the present invention will now be more particularly described by way of example with reference to the accompanying drawings, in which:
- Fig. 1: is a schematic perspective view of a first traction element embodying the invention, the element being in the form of a wheel rim having a single series of surface-engaging arms;
- Fig. 2: is a schematic perspective view of a second traction element embodying the invention, the element being in the form of a wheel and having a triple series of surface-engaging arms;
- Fig. 3: is a schematic side view of the traction element of Fig. 3, showing the relationship of the arms of two of the series;
- Fig. 4: is a schematic side view of a third traction element embodying the invention, the element being in the form of an endless track; and
- Fig. 5: is a detail view, to enlarged scale, of a lower part of the traction element of Fig. 1, showing the co-operation of the arms with a supporting surface and consequent deflection of those arms.

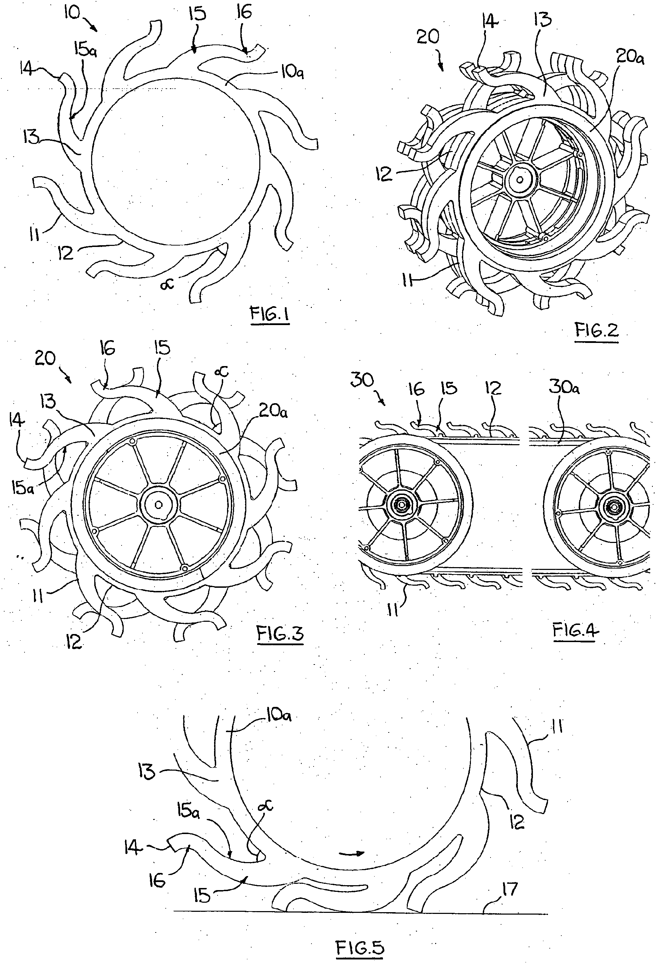

Referring now to the drawings there is shown a traction element 10 (Fig. 1), 20 (Figs. 2 and 3) and 30 (Fig. 4) for providing traction relative to a surface over which a vehicle equipped with the element is to travel. Such a vehicle can be any form of, for example, automotive land vehicle, but may offer particular advantages when employed in remotely controlled or robotic vehicles. The surface can be a generally horizontal or inclined surface, whether of the natural ground or a man-made substrate such as a road or floor, or even a vertical surface of suitable height in relation to the size, particularly height, of the traction element. In the case of horizontal or inclined surfaces such surfaces can include highly textured surfaces, for example those with irregular profiles or those bearing or incorporating obstacles such as rocks, branches, logs, ledges, gutters, etc. The consistency of the surface can also vary, for example solid, particulate, soft, slippery, etc.

The traction element 10 of Fig. 1 comprises a rotary member 10a in the form of a wheel rim intended to be mounted on a wheel or hub rotatable about an axis of rotation located centrally of the rim. The traction element 20 of Figs. 2 and 3 comprises a rotary member 20a in the form of a wheel, here, by way of arbitrary example, a spoked wheel intended to be mounted for rotation about a centre axis thereof. The traction element 30 of Fig. 4 comprises a circulatory member 30a in the form of an endless belt intended to be mounted on two or more spaced-apart wheels (shown in dashed lines) for circulatory travel on an endless path, such a belt in use being part of a drive system of a track-laying vehicle. The wheel rim, wheel and belt are presented merely as generic illustrations of commonplace forms of rotary and circulatory members employed in vehicle drive systems.

Each of the members, 10a, 20a and 30a is provided at the periphery 12 thereof, in particular its peripheral surface area, with at least one series of resiliently deflectable surface-engaging arms 11 for supporting the member on and providing traction relative to a surface. The arms 11 are equidistantly spaced around this periphery and of substantially the same shape and orientation, as can be seen in the drawings. The number of arms in the series is primarily a function of the peripheral length of the member 10a, 20a or 30a, thus the circumference of a circular rotary member such as 10a or 20a, and the length of those arms and is preferably selected with a view to providing engagement with a supporting surface by a sufficient number of arms to avoid contact of the periphery 12 itself with the surface. Each arm 11 has a root 13 at the periphery 12 and a tip 14 remote from the periphery 12, in particular (in the case of the rotary member 10a or 20a) at a radial spacing from the periphery. The root 13 is attached to the member at the periphery 12, preferably by way of integral construction therewith, such as by injection-moulding the arms 11 together with the wheel rim, wheel or belt. The arms and the wheel rim, wheel or belt are in that case preferably made of a stiffly resilient material, especially a microcellular elastic polymer with compressible air inclusions in the cells.

The enhanced traction capability of the traction element 10, 20, 30 resides particularly in the specific shape and orientation of the arms 11 in the series in conjunction with the arm length and spacing. Each arm 11 has an inner curved portion 15 starting at the root 13 and an outer curved portion 16 ending at the tip 14. The two curved portions 15 and 16 preferably pass one to the other without any form of interruption at the transition or intermediate portion, although the latter, for example a short straight section, is possible. The inner curved portion 15 departs from the periphery 12 at an acute angle α at the concave side 15a of the inner curved portion, preferably an acute angle of 40 to 50 degrees, especially about 45 degrees, measured at the root 13. Such an angle of departure means that the inner curved portions 15 of the arms 11 extend from the periphery 12 somewhat in the manner of trajectories described by centrifugal impulsion as in the case of, for example, the trails from a spinning "catherine wheel" or other spinning body with centrifuged discharges at the circumference.

The outer curved portion 16 of each arm 11 is curved in opposite sense to the inner curved portion 15 of the respective arm, with the result that the arm as a whole has generally the form of a lazy 'S' or a reversed lazy 'S' depending on direction of viewing. The arm configuration is thus characterised by an inner portion (portion closest to the periphery 12 of the member 10a, 20a, 30a) which continues to shadow the periphery 12 with a progressively increasing spacing therefrom, thus overlapping or congruent with a section of the periphery, and an outer portion which relatively abruptly turns away from that section to define, in effect, a claw and the tip 14 of which lies, together with the tips 14 of all other arms, on a notional path located outside the periphery 12 at a generally constant spacing therefrom insofar as the arms 11 are in undeflected state.

The arm configuration is further characterised by narrowing of each arm 11 in the direction of its tip 14, preferably in such a way that the inner curved portion 15 is progressively thinner or progressively tapers towards the transition to the outer curved portion 16, which can have a substantially constant thickness. In addition, the radius of curvature of the inner curved portion 15 is greater than that of the outer curved portion 16. As a consequence and as shown in the drawings the outer curved portion 16 is, overall, shorter and thinner than the inner curved portion 15. The outer curved portion 16 is thus intrinsically more flexible than the inner curved portion 15, but the greater length of the latter allows it to bend relative to the periphery 12.

A feature of the arrangement of the arms 11 is that their individual lengths are so correlated with their pitch at the periphery 12 of the member 10a, 20a, 30a that under maximum deflection of each arm towards the periphery 12 a tip portion of that arm bears against a root portion of a respective adjacent arm, as can be seen in Fig. 5. As a result, contact of the periphery 12, i.e. the peripheral surface of the member 10a, 20a, 30a, with the ground or other supporting surface is precluded. Contact with the ground or other supporting surface is always by one or more of the arms 11, initially the end face of the tip 14 of the or each such contacting arm and then, under deflection of the respective arm, the outwardly facing surface of the arm, that is to say the surface remote from the periphery 12 (see Fig. 4).

Fig. 1 shows a traction element with a single series of the arms 11. Provision of one or more additional series of the arms may increase the level of traction able to be supplied by the traction element, particularly if the arms 11, or at least the tips 14 thereof, are offset in circumferential direction relative to those of the or each adjacent series. In that case each arm tip 13 of a series can be closely followed, with respect to engagement with the ground or other supporting surface, by an arm tip 13 of an adjacent series, assuming the arms are present in each series in the same number and have the same length. It is also possible to impart full bi-directionality to the traction element by arranging the arms of each series to be oriented in opposite sense to the arms of the or each adjacent series, as shown in Figs. 2 and 3. The embodiment of Figs. 2 and 3 has, by way of example, three such series of arms with the arms of the two outermost series oriented in the same sense and the arms of the intermediate series in opposite sense. This equates with a greater level of grip in one rotational direction by comparison with the other; the one direction might, in a practical realisation, be associated with forward travel as distinct from less frequently employed reverse travel of a vehicle equipped with the traction element.

As can be seen in Figs. 2 and 3, although the tips 14 of the arms 11 of mutually adjacent series are offset in the circumferential direction of the rotary member 20a the roots 13 of the arms are coincident as seen in axial direction of the member. In addition, the member 20a can be of divided construction, in particular so that the arms 11 of each series are provided on - especially formed integrally with - an individual, separately constructed part of the member, here three such parts. The orientation of the arms of one series in opposite sense to the arms of an adjacent series can be achieved by the simple expedient of assembling those parts in reversed face-to-face relationship. The parts can be aligned with one another by the use of, for example, assembly pins (Fig. 3) temporarily extending through those parts parallelly to the axis of rotation of the member 20a.

The described specific constructions and arrangements of the resiliently deflectable surface-engaging arms 11 can be employed equally well by a circulatory member, i.e. the endless belt of Fig. 4

The tractive effect of the traction element 10, 20, 30 furnished with the arms 11 of a described configuration and disposition is described with reference to Fig. 5, which shows, by way of representative example, a section of the rotary member 10a in contact with a supporting surface 17. The surface 17 is for simplicity depicted as a planar surface. In the illustrated example the rotary member is rotating in anti-clockwise sense as symbolised by the arrow. This may be regarded as forward motion in a right-to-left direction of a vehicle (not shown) equipped with the traction element. The vehicle can be of any kind, but especially a remotely controlled, automotive robotic vehicle of a weight so correlated with a selected modulus of elasticity of the resiliently deflective arms 11 of the rotary member that flexure of each arm 11 in direction towards the periphery 12 will naturally occur under loading by gravitational force, that is to say the weight of the vehicle resting on the surface 17.

As can be seen from Fig. 5, when the rotary member 10a rotates each arm 11 initially engages the surface 17 at the end face of its tip 14 and with progressing rotation the weight loading of the arm causes deflection thereof towards the periphery at most until the tip portion of the arm bears against a root portion of the next arm in clockwise direction, during which contact with the surface 17 passes from the end face of the tip 14 to a larger area portion of the radially outwardly facing surface of the arm. As rotation of the member 10a continues and the arm in question progressively disengages from the supporting surface 17 the resilient character of the arm generates a restoring force returning the arm to its original, undeflected form.

In this simple scenario, relevant to interaction of the traction element and a generally planar supporting surface (whether horizontal or inclined), the traction element essentially functions like a tyre, except that a tyre usually has a single footprint of substantially constant area. A traction element embodying the present invention generates a sequence of footholds which each progressively develop into a larger, low-pressure footprint. In the case of a slippery surface, the outer curved portions 16 of the arms exert a 'clawing' action drawing the element across the surface. If the surface is soft, tip portions of the arms can penetrate below the surface and into the constituent material of the ground, whether particulate as in the case of shingle or viscous as in the case of mud, at least until the material contacts the periphery 12 of the traction element and arrests or largely arrests subsidence of the element, at which point the clawing action of each arm as it turns expels material behind it and pulls the element over/through the surface. If the arms do not deflect in this situation, the action is similar to the ribs of a tyre of a tractor or other vehicle intended to run on soft soil or similarly yielding surface material.

In addition to these capabilities of forward or reverse motion over generally flat surfaces, whether solid, soft, high-friction or low-friction, the traction element 10 has the capability of negotiating obstacles including those presenting vertical risers such as gutters and stairs. In these circumstances, the arms 11 function similarly to the stiffly articulated legs of, for example, an arthropod by levering the traction element as a whole up and over obstacles including rocks, branches and detritus and debris of all kinds. The claw-like tip portions of the arms offer purchase by engaging the upper surfaces of obstacles and hauling the traction element onto the obstacle as the member 10a, 20a, 30a continues to rotate or circulate. In that case the ability of the arm, which is searching for purchase, to flex allows grip to be maintained in circumstances when slip might otherwise occur and thus affords the opportunity of a succeeding arm to engage the obstacle as rotation or circulation of the member continues. The spaces between the arms allow reception of an edge or similar obstruction so that the arms can, in effect, reach past such an obstruction. The extent to which the traction element can negotiate obstacles with vertical or generally vertical faces will depend on a number of factors such as the height of the face, height of the traction element, length of the arms and weight of the traction element including associated vehicle. Subject to these considerations, the traction element with its resiliently deflectable claw-tipped arms simulating the climbing action of a living being has the capability of climbing up and over faces of obstacles that might defeat even specially treaded tyres or ribbed tracks.

In the specific instance of a step or other large obstacle, especially with a distinct riser and a horizontal or generally horizontal superior surface, the arm 11 or arms 11 encountering the riser will be deflected inwardly towards the periphery 12 of the member 10a, 20a, 30a so as to allow the traction element as a whole to continue towards the step. The deflection produces an increase in the effective length of reach of the following arm or arms being brought into contact with the step and this in turn increases the probability of acquisition of firm engagement with and purchase in relation to the superior surface of the step, in particular without undue expenditure of energy due to being forced against the riser.

The energy that is expended is thus deployed to gain purchase on the part of the step able to assist with climbing, the purchase taking place under deflection of the arm or arms now bearing at the tip or tips thereof on the superior surface of the step, which levers the traction element up onto the step. The curvature of the outer curved portion 16 of each arm 11 in opposite sense to that of inner curved portion 15 ensures that the deflection towards the periphery 12 is constrained in a specific direction, namely the direction of ultimately bringing the tip portion of the deflected arm to bear against the root portion of an adjacent arm. In addition, curvature of the outer curved portion 16 in the described manner forms a claw-like termination which, when the arm concerned presses down on the superior surface of the step, results in outward extension of the arm and spreading on that surface so as to promote acquisition of purchase. This contributes to avoidance of a problem afflicting conventional tyres and endless belts with rigid or semi-rigid flights, ribs, etc., namely 'skitter' when seeking to gain purchase and a tendency to skewing of the traction element and the vehicle equipped with the element. Although this climbing ability of the traction element has been exemplified in relation to a step, the obstacle could be of any kind.

The described capabilities of the traction element are enhanced by the afore-mentioned spring action when the rotation or circulation of the member 10a, 20a, 30a produces relaxation of the compressive force responsible for deflection of an arm, so that the arm can, under the restoring action produced by its intrinsic resilience, return to its undeflected or fully extended state and in so doing provide a spring action assisting forward movement of the member.

The number of arms 11 in the series can be selected with reference to the height of the rotary or circulatory member, i.e. wheel, wheel rim or belt, and the arm length, but preferably so that a fully inwardly deflected arm bears against a root portion of an adjoining arm in the series. This confines contact with a supporting surface to the arms as distinct from the periphery of the wheel, wheel rim or belt and thus reduces jolting during travel over flat surfaces.

## Claims

1. A vehicle traction element (10, 20, 30) for providing traction relative to a surface over which a vehicle equipped with the element is to travel, comprising a rotary or circulatory member (10a, 20a, 30a) defining a periphery (12) and provided thereat with a series of resiliently deflectable surface-engaging arms(11) substantially equidistantly spaced around the periphery (12) and of substantially the same shape and orientation, each arm (11) having a root (13) at the periphery (12) and a tip (14) remote from the periphery (12), and each arm (11) comprising an inner curved portion (15) and an outer curved portion (16) ending at the tip (14) and curved in opposite sense to the inner curved portion,
**characterised in that** the inner curved portion (15) starts at the root (13) and departs from the periphery (12) at an acute angle (α) on a concave side (15a) of the inner curved portion (15).

2. An element according to claim 1, wherein the rotary member (10a, 20a) is a wheel or wheel rim.

3. An element according to claim 1, wherein the circulatory member (30a) is an endless track.

4. An element according to any one of the preceding claims, wherein each arm (11) has a greater degree of resilience in the vicinity of its tip (14) than in the vicinity of its root (13).

5. An element according to claim 4, wherein each arm (11) is thinner in the vicinity of its tip (14) than in the vicinity of its root (113).

6. An element according to any one of the preceding claims, wherein the radius of curvature of the inner curved portion (15) of each arm (11) is greater than that of the outer curved portion (16) of the respective arm (11).

7. An element according to any one of the preceding claims, wherein the arms (11) are of such a length and spaced apart by such an amount that under maximum deflection towards the periphery (12) of the member (10a, 20a, 30a) each arm (11) bears at a tip portion thereof against a root portion of a respective adjacent arm (11) of the series.

8. An element according to any one of the preceding claims, wherein the arms (11) are formed integrally with the member (10a, 20a, 30a).

9. An element according to any one of the preceding claims, comprising at least one further series of such arms (11) alongside the first-mentioned series of arms (11).

10. An element according to claim 9, when the arms (11) of the at least one further series are oriented in opposite sense to the arms (11) of the first-mentioned series.

11. An element according to claim 10, wherein the shape of each arm (11) of the at least one further series is substantially the same as that of each arm (11) of the first-mentioned series and wherein the number of arms (11) of the at least one further series is preferably the same as the number of arms (11) of the first-mentioned series.

12. An element according to any one of claims 9 to 11, wherein the root (13) of each arm (11) of the at least one further series lies alongside the root (13) of a respective arm (11) of the first-mentioned series.

13. An element according to any one of claims 9 to 12, wherein the tips (14) of the arms (11) of the at least one further series are offset from the tips (14) of the arms (11) of the first-mentioned series in the peripheral direction of the member (20a).

14. An element according to any one of claims 9 to 13, wherein the member (20a) is of divided construction comprising a first part provided with the arms (11) of the first-mentioned series and a second part provided with the arms (11) of the at least one further series, the parts being secured against relative movement.

15. An element according to any one of claims 9 to 14, comprising a plurality of further series of such arms (11), the arms of each series in the totality of series being oriented in opposite sense to the arms (11) of the or each series directly alongside.

## Patentansprüche

1. Fahrzeugtraktionselement (10, 20, 30) zum Bereitstellen von Traktion in Relation zu einer Oberfläche, über die ein Fahrzeug, das mit dem Element ausgerüstet ist, fahren soll, umfassend ein rotatorisches oder zirkulatorisches Bauteil (10a, 20a, 30a), das einen Umfang (12) definiert und daran mit einer Reihe von elastisch biegbaren, eine Oberfläche angreifenden Armen (11) versehen ist, die im Wesentlichen abstandsgleich um den Umfang (12) beabstandet sind und eine im Wesentlichen gleiche Form und Ausrichtung aufweisen, wobei jeder Arm (11) einen Ansatz (13) an dem Umfang (12) und eine Spitze (14) entfernt von dem Umfang (12) aufweist, und wobei jeder Arm (11) einen inneren gekrümmten Abschnitt (15) und einen äußeren gekrümmten Abschnitt (16), der an der Spitze (14) endet und in entgegengesetzter Richtung zu dem inneren gekrümmten Abschnitt gekrümmt ist, umfasst,
**dadurch gekennzeichnet, dass** der innere gekrümmte Abschnitt (15) an dem Ansatz (13) beginnt und von dem Umfang (12) in einem spitzen Winkel (α) an einer konkaven Seite (15a) des inneren gekrümmten Abschnitts (15) abgeht.

2. Element nach Anspruch 1, wobei das rotatorische Bauteil (10a, 20a) ein Rad oder eine Radfelge ist.

3. Element nach Anspruch 1, wobei das zirkulatorische Bauteil (30a) eine Raupenkette ist.

4. Element nach einem der vorhergehenden Ansprüche, wobei jeder Arm (11) einen höheren Elastizitätsgrad in der Nähe seiner Spitze (14) als in der Nähe seines Ansatzes (13) aufweist.

5. Element nach Anspruch 4, wobei jeder Arm (11) in der Nähe seiner Spitze (14) dünner als in der Nähe seines Ansatzes (13) ist.

6. Element nach einem der vorhergehenden Ansprüche, wobei der Krümmungsradius des inneren gekrümmten Abschnitts (15) jedes Arms (11) größer als der des äußeren gekrümmten Abschnitts (16) des jeweiligen Arms (11) ist.

7. Element nach einem der vorhergehenden Ansprüche, wobei die Arme (11) eine derartige Länge aufweisen und um einen derartigen Betrag voneinander beabstandet sind, dass bei einer maximalen Biegung hin zu dem Umfang (12) des Bauteils (10a, 20a, 30a) jeder Arm (11) an einem Spitzenabschnitt davon an einem Ansatzabschnitt eines jeweiligen angrenzenden Arms (11) der Reihe anliegt.

8. Element nach einem der vorhergehenden Ansprüche, wobei die Arme (11) integral mit dem Bauteil (10a, 20a, 30a) ausgebildet sind.

9. Element nach einem der vorhergehenden Ansprüche, umfassend mindestens eine weitere Reihe derartiger Arme (11) neben der zuerst genannten Reihe von Armen (11).

10. Element nach Anspruch 9, wobei die Arme (11) der mindestens einen weiteren Reihe in entgegengesetzte Richtung zu den Armen (11) der zuerst genannten Reihe ausgerichtet sind.

11. Element nach Anspruch 10, wobei die Form jedes Arms (11) der mindestens einen weiteren Reihe im Wesentlichen dieselbe wie die jedes Arms (11) der zuerst genannten Reihe ist und wobei die Anzahl an Armen (11) der mindestens einen weiteren Reihe vorzugsweise dieselbe wie die Anzahl an Armen (11) der zuerst genannten Reihe ist.

12. Element nach einem der Ansprüche 9 bis 11, wobei der Ansatz (13) jedes Arms (11) der mindestens einen weiteren Reihe neben dem Ansatz (13) eines jeweiligen Arms (11) der zuerst genannten Reihe liegt.

13. Element nach einem der Ansprüche 9 bis 12, wobei die Spitzen (14) der Arme (11) der mindestens einen weiteren Reihe von den Spitzen (14) der Arme (11) der zuerst genannten Reihe in der Umfangsrichtung des Bauteils (20a) versetzt sind.

14. Element nach einem der Ansprüche 9 bis 13, wobei das Bauteil (20a) einer geteilten Bauweise ist, umfassend einen ersten Teil, der mit den Armen (11) der zuerst genannten Reihe versehen ist, und einen zweiten Teil, der mit den Armen (11) der mindestens einen weiteren Reihe versehen ist, wobei die Teile gegen eine relative Bewegung gesichert sind.

15. Element nach einem der Ansprüche 9 bis 14, umfassend eine Mehrzahl von weiteren Reihen derartiger Arme (11), wobei die Arme jeder Reihe in der Gesamtheit an Reihen in entgegengesetzter Richtung zu den Armen (11) der oder jeder Reihe direkt daneben ausgerichtet sind.

## Revendications

1. Élément de traction (10, 20, 30) de véhicule pour fournir une traction par rapport à une surface sur laquelle un véhicule équipé de l'élément est appelé à se déplacer, comprenant un organe rotatif ou circulant (10a, 20a, 30a) définissant une périphérie (12) et pourvu, au niveau de celle-ci, d'une série de bras déformables élastiquement (11) venant au contact de la surface espacés de façon sensiblement équidistante autour de la périphérie (12) et sensiblement de la même forme et de la même orientation, chaque bras (11) étant pourvu d'un pied (13) au niveau de la périphérie (12) et d'un bout (14) distant de la périphérie (12), et chaque bras (11) comprenant une partie intérieure incurvée (15) et une partie extérieure incurvée (16) se terminant au niveau du bout (14) et incurvée en sens opposé à la partie intérieure incurvée,
**caractérisé en ce que** la partie intérieure incurvée (15) commence au niveau du pied (13) et s'éloigne de la périphérie (12) en formant un angle aigu (α) d'un côté concave (15a) de la partie intérieure incurvée (15).

2. Élément selon la revendication 1, dans lequel l'organe rotatif (10a, 20a) est une roue ou une jante de roue.

3. Élément selon la revendication 1, dans lequel l'organe circulant (30a) est une chenille.

4. Élément selon l'une quelconque des revendications précédentes, dans lequel chaque bras (11) présente un plus grand degré d'élasticité au voisinage de son bout (14) qu'au voisinage de son pied (13).

5. Élément selon la revendication 4, dans lequel chaque bras (11) est plus mince au voisinage de son bout (14) qu'au voisinage de son pied (13).

6. Élément selon l'une quelconque des revendications précédentes, dans lequel le rayon de courbure de la partie intérieure incurvée (15) de chaque bras (11) est supérieur à celui de la partie extérieure incurvée (16) du bras (11) respectif.

7. Élément selon l'une quelconque des revendications précédentes, dans lequel les bras (11) présentent une longueur telle et sont espacés d'une quantité telle que, en déformation maximale vers la périphérie (12) de l'organe (10a, 20a, 30a), chaque bras (11) prend appui, au niveau d'une partie de son bout, sur une partie du pied d'un bras adjacent (11) respectif de la série.

8. Élément selon l'une quelconque des revendications précédentes, dans lequel les bras (11) sont formés d'un seul tenant avec l'organe (10a, 20a, 30a).

9. Élément selon l'une quelconque des revendications précédentes, comprenant au moins une série supplémentaire de tels bras (11) à côté de la série de bras (11) mentionnée en premier lieu.

10. Élément selon la revendication 9, dans lequel les bras (11) de l'au moins une série supplémentaire sont orientés en sens opposé aux bras (11) de la série mentionnée en premier lieu.

11. Élément selon la revendication 10, dans lequel la forme de chaque bras (11) de l'au moins une série supplémentaire est sensiblement la même que celle de chaque bras (11) de la série mentionnée en premier lieu, et dans lequel le nombre de bras (11) de l'au moins une série supplémentaire est de préférence le même que le nombre de bras (11) de la série mentionnée en premier lieu.

12. Élément selon l'une quelconque des revendications 9 à 11, dans lequel le pied (13) de chaque bras (11) de l'au moins une série supplémentaire se situe à côté du pied (13) d'un bras (11) respectif de la série mentionnée en premier lieu.

13. Élément selon l'une quelconque des revendications 9 à 12, dans lequel les bouts (14) des bras (11) de l'au moins une série supplémentaire sont décalés par rapport aux bouts (14) des bras (11) de la série mentionnée en premier lieu dans la direction périphérique de l'organe (20a).

14. Élément selon l'une quelconque des revendications 9 à 13, dans lequel l'organe (20a) présente une construction divisée comprenant un premier composant pourvu des bras (11) de la série mentionnée en premier lieu et un deuxième composant pourvu des bras (11) de l'au moins une série supplémentaire, les composants étant solidarisés pour empêcher tout mouvement relatif.

15. Élément selon l'une quelconque des revendications 9 à 14, comprenant une pluralité de séries supplémentaires de tels bras (11), les bras de chaque série dans la totalité de séries étant orientés en sens opposé aux bras (11) de la ou chaque série se trouvant directement à côté.
